# EUROPEAN PATENT APPLICATION

(11) **EP 2 592 305 A2**
(43) Date of publication of application: **15.05.2013**
(21) Application number: 12191174.7
(22) Date of filing: 03.11.2012
(51) Int. Cl.: F16H 61/32, F16H 63/30

(54) **Transmission actuating device**

(30) Priority: 08.11.2011 JP 2011244477
(71) Applicant: JTEKT CORPORATION, Osaka-shi Osaka 542-8502 (JP)
(72) Inventor: Uemoto, Takafumi, Osaka-shi,, Osaka 542-8502 (JP)
(74) Representative: Winter, Brandl, Fürniss, Hübner, Röss, Kaiser, Polte - Partnerschaft

(57) **Abstract**

A transmission actuating device includes: a shift select shaft; an electric motor that generates rotational driving force; a resolver that detects a rotation angle of the electric motor; a shift conversion mechanism that converts the rotational driving force into force that rotates the shift select shaft about its axis; a shift electromagnetic clutch that is able to allow or interrupt transmission of the rotational driving force from the electric motor to the shift conversion mechanism; a shift rotation angle sensor that detects a rotation angle of the shift select shaft; and a control unit that executes control to additionally move the shift select shaft by a displacement lost due to a slip of the shift electromagnetic clutch on the basis of detected rotation angles output from the resolver and the shift rotation angle sensor.

## Description

### BACKGROUND OF THE INVENTION

### 1. Field of the Invention

The invention relates to a transmission actuating device used to actuate a transmission.

### 2. Description of Related Art

There is a conventional gear-shifting apparatus of an automated manual transmission that is a manual transmission in which gearshift is performed without depressing a clutch pedal. The above-described gear-shifting apparatus includes a transmission actuating device that shifts the gear of a shift mechanism. For example, Japanese Patent Application Publication No. 2011-75097 (JP 2011-75097 A) describes a shift/select actuating device as an example of the transmission actuating device. The shift/select actuating device rotates a shift select shaft about its axis by rotational driving force of an electric motor to perform a shift operation, or moves the shift select shaft in its axial direction by the rotational driving force of the electric motor. The shift/select actuating device includes a first conversion mechanism, a second conversion mechanism, a first electromagnetic clutch and a second electromagnetic clutch. The first conversion mechanism converts the rotational driving force of the electric motor to force for rotating the shift select shaft. The second conversion mechanism converts the rotational driving force to force for axially moving the shift select shaft. The first electromagnetic clutch is able to allow or interrupt transmission of the rotational driving force from the electric motor to the first conversion mechanism. The second electromagnetic clutch is able to allow or interrupt transmission of the rotational driving force from the electric motor to the second conversion mechanism.

In the transmission actuating device having the configuration described in JP 2011-75097 A where the shift electromagnetic clutch (first electromagnetic clutch) is interposed between the shift conversion mechanism (first conversion mechanism) and the electric motor and the select electromagnetic clutch (second electromagnetic clutch) is interposed between the select conversion mechanism (second conversion mechanism) and the electric motor, a slip due to a malfunction may occur in the electromagnetic clutches. Therefore, in the thus configured transmission actuating device, it is necessary to detect an abnormal slip of the electromagnetic clutches in order to detect a malfunction of the electromagnetic clutches.

For example, to detect an abnormality in the shift electromagnetic clutch, the rotation angle of the electric motor and the rotation angle of the shift select shaft are detected by sensors. On the basis of the detection results output from the sensors, a difference between a predetermined rotation angle and an actual rotation angle in the shift select shaft is obtained. More specifically, the difference is a difference between an actual rotation angle of the electric motor and a rotation angle of the electric motor, which is required to rotate the shift select shaft by a rotation angle detected by a rotation detection sensor for the shift select shaft. When the difference exceeds a predetermined threshold, it may be determined that there is an abnormality in the shift electromagnetic clutch. Similarly, for example, to detect an abnormality in the select electromagnetic clutch, the rotation angle of the electric motor and the axial displacement of the shift select shaft are detected by sensors. On the basis of the detection results output from the sensors, a difference between a predetermined axial displacement and an actual axial displacement in the shift select shaft is obtained. More specifically, the difference is a difference between an actual rotation angle of the electric motor and a rotation angle of the electric motor, which is required to axially move the shift select shaft by a displacement detected by an axial detection sensor for the shift select shaft. When the difference exceeds a predetermined threshold, it may be determined that there is an abnormality in the select electromagnetic clutch. When it is determined that there is an abnormality in one of the electromagnetic clutches, a signal indicating that there is an abnormality in the electromagnetic clutch is transmitted to a vehicle-side control unit of a vehicle, and an abnormality notification is provided at the vehicle side.

Even when there is no malfunction in the electromagnetic clutches, if a voltage applied to at least one of the electromagnetic clutches is insufficient or foreign matter is caught between an armature and a rotor in at least one of the electromagnetic clutches, a minute amount of slip may occur in the electromagnetic clutch. Such a minute amount of slip is significantly smaller than a slip that occurs due to a malfunction of the electromagnetic clutch. Therefore, it is not possible to detect such a minute amount of slip through the above-described slip abnormality detection.

However, there actually occurs a slip although the amount of the slip is minute. Therefore, torque is definitely insufficient in the shift conversion mechanism or the select conversion mechanism. If the torque remains insufficient, it may not be able to appropriately perform a gear shift operation. On the other hand, performing abnormality detection each time a minute amount of slip is detected leads to provision of abnormality notification although there is no malfunction in the electromagnetic clutches. Therefore, when there is a minute amount of slip in at least one of the electromagnetic clutches, it is desirable that a shortfall in the torque should be made up without determining that there is an abnormality.

### SUMMARY OF THE INVENTION

It is an object of the invention to provide a transmission actuating device that is always able to appropriately perform a gear shift operation irrespective of whether a slip of an electromagnetic clutch has occurred.

An aspect of the invention relates to a transmission actuating device that includes: a shift operation unit that causes a transmission to perform a gear shift operation; an electric motor that generates rotational driving force; motor rotation angle detecting means for detecting a rotation angle of the electric motor; a conversion mechanism that converts the rotational driving force from the electric motor into force that moves the shift operation unit; an electromagnetic clutch that is able to allow or interrupt transmission of the rotational driving force from the electric motor to the conversion mechanism; displacement detecting means for detecting a displacement of the shift operation unit; and additional movement control means for executing control to additionally move the shift operation unit by a displacement lost due to a slip of the electromagnetic clutch, based on the detected rotation angle output from the motor rotation angle detecting means and the detected displacement output from the displacement detecting means.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic exploded perspective view of the configuration of part of a gear-shifting apparatus to which a transmission actuating device according to an embodiment of the invention is applied;
FIG. 2 is a perspective view that shows the configuration of the transmission actuating device shown in FIG. 1;
FIG. 3 is a sectional view that shows the configuration of the transmission actuating device shown in FIG. 1;
FIG. 4 is a sectional view taken along the line IV-IV in FIG. 3;
FIG. 5 is a block diagram that shows the electrical configuration of the transmission actuating device shown in FIG. 1;
FIG. 6 is a flowchart that shows shift operation control;
FIG. 7A to FIG. 7C are schematic views for illustrating the details of an additional shift operation;
FIG. 8 is a flowchart that shows select operation control; and
FIG. 9A to FIG. 9C are schematic views for illustrating the details of an additional select operation.

### DETAILED DESCRIPTION OF EMBODIMENTS

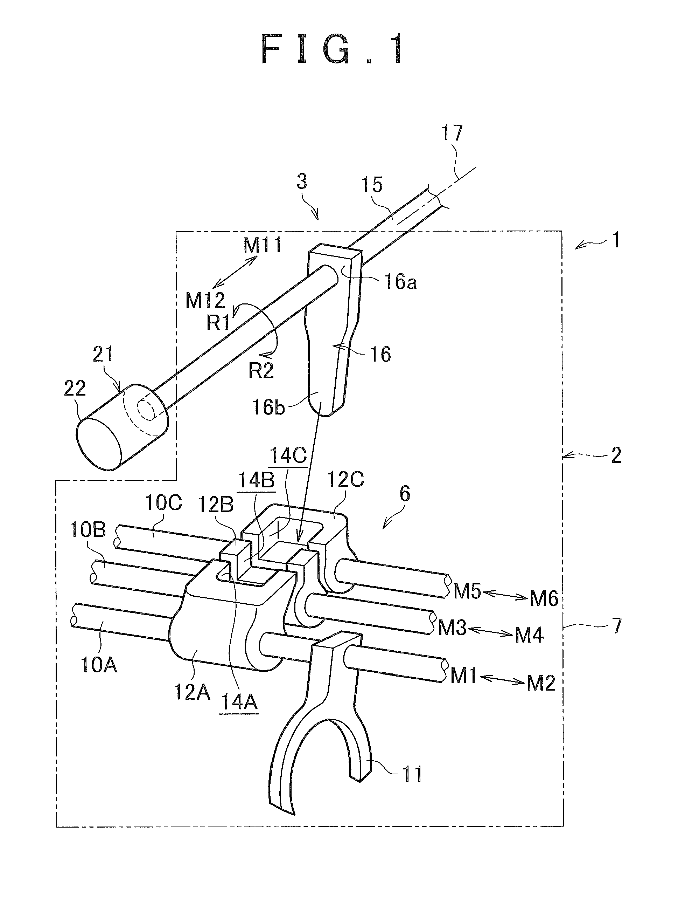

Hereinafter, an embodiment of the invention will be described in detail with reference to the accompanying drawings. FIG. 1 is a schematic exploded perspective view of the configuration of part of a gear-shifting apparatus 1 to which a transmission actuating device 3 according to the embodiment of the invention is applied. The gear-shifting apparatus 1 includes a transmission 2 and the transmission actuating device 3 that actuates the transmission 2 to shift gears. The transmission 2 includes a power transmission device (not shown), a shift operation mechanism 6 and a gear housing 7. The power transmission device is formed of a known constant-mesh parallel-shaft gear power transmission device. The shift operation mechanism 6 changes the power transmission path of the power transmission device among a plurality of power transmission paths. The gear housing 7 accommodates the power transmission device and the shift operation mechanism 6. The gear-shifting apparatus 1 that includes the transmission 2 is mounted in a vehicle, such as a passenger automobile or a truck. By changing the power transmission path in the power transmission device, it is possible to change the power transmission ratio.

The shift operation mechanism 6 is accommodated in the gear housing 7, and includes a plurality of fork shafts 10A, 10B, 10C that extend parallel to each other. The fork shaft 10A is provided so as to be movable in axial directions M1, M2. The fork shaft 10B is provided so as to be movable in axial directions M3, M4. The fork shaft 10C is provided so as to be movable in axial directions M5, M6. The axial directions M1, M3, M5 are oriented in the same direction and are parallel to each other. The axial directions M2, M4, M6 are oriented in a direction opposite to the axial directions M1, M3, M5.

The fork shafts 10A, 10B, 10C are arranged parallel to each other so as to be aligned on a straight line when viewed from the axial directions M1, M3, M5 (M2, M4, M6). Fork heads 12A, 12B, 12C are fixed to middle portions of the fork shafts 10A, 10B, 10C, respectively. The fork heads 12A, 12B, 12C are actuated by the transmission actuating device 3 (the shift operation mechanism 6). The fork heads 12A, 12B, 12C are located at the same position in the axial directions M1, M3, M5. Each of the fork heads 12A, 12B, 12C has a facing surface that faces the transmission actuating device 3. The facing surface of the fork heads 12A, 12B, 12C are flush with each other. Engagement recesses 14A, 14B, 14C are formed in the respective facing surfaces. A distal end portion 16b of the internal lever 16 is able to move between engagement positions, at which the distal end portion 16b is engaged with the respective fork heads 12A, 12B, 12C, through an internal space of the engagement recesses 14A, 14B, 14C.

In addition, a shift fork 11 is fixed to each of the fork shafts 10A, 10B, 10C. Each shift fork 11 is engaged with a corresponding operated member (not shown) that is operated to change the power transmission path of the power transmission device. The operated members include, for example, a clutch sleeve and a synchronizer mechanism. In FIG. 1, only the shift fork 11 provided on the fork shaft 10A is shown. Through movement of each shift fork 11 in a corresponding one of the axial directions M1 to M6, the shift fork 11 is engaged with the corresponding operated member to actuate the operated member. Note that FIG. 1 shows engagement grooves as the engagement recesses 14A, 14B, 14C. However, engagement holes may be, of course, employed instead of the engagement grooves.

The transmission actuating device 3 includes the columnar shift select shaft 15 (drive shaft) and an electric actuator 21. The shift select shaft 15 causes the shift operation mechanism 6 to perform a shift operation and a select operation. The electric actuator 21 is used as a rotary driving source for causing the shift select shaft 15 to perform a shift operation and a select operation. The shift select shaft 15 has a central axis 17. The shift select shaft 15 is supported by the gear housing 7 so as to be rotatable about the axis (that is, the central axis 17) of the shift select shaft 15 in a first rotation direction R1 or a second rotation direction R2 and movable in the first axial direction M11 or the second axial direction M12. The shift select shaft 15 is arranged so as to be neither parallel to nor intersecting with each of the fork shafts 10A, 10B, 10C, and the shift select shaft 15 and each of the fork shafts 10A, 10B, 10C form an angle of 90 degrees when viewed from above. The second rotation direction R2 is a rotation direction opposite to the first rotation direction R1. The second axial direction M12 is an axial direction opposite to the first axial direction M11.

A base end portion 16a of the internal lever 16 accommodated in the gear housing 7 is fixed to a middle portion of the shift select shaft 15. The internal lever 16 rotates together with the shift select shaft 15 about the central axis 17 of the shift select shaft 15. The distal end portion (left end portion in FIG. 1) of the shift select shaft 15 protrudes outward from the gear housing 7. When the shift select shaft 15 is moved in the first axial direction M11 by the electric actuator 21, the internal lever 16 is moved in the first axial direction M11. On the other hand, when the shift select shaft 15 is moved in the second axial direction M12 by the electric actuator 21, the internal lever 16 is moved in the second axial direction M12. Due to the movement in the axial direction M11 or M12, the distal end portion 16b of the internal lever 16 is engaged with a selected one of the fork heads 12A, 12B, 12C. In this way, a select operation is completed.

When the shift select shaft 15 is rotated in the first rotation direction R1 by the electric actuator 21, the internal lever 16 is pivoted in the first rotation direction R1 about the shift select shaft 15. On the other hand, when the shift select shaft 15 is rotated in the second rotation direction R2 by the electric actuator 21, the internal lever 16 is pivoted in the second rotation direction R2 about the shift select shaft 15. As a result, one of the fork heads 12A, 12B, 12C, which has been engaged with the internal lever 16, moves in one of the axial directions M1 to M6 of a corresponding one of the fork shafts 10A, 10B, 10C. In this way, a shift operation is completed.

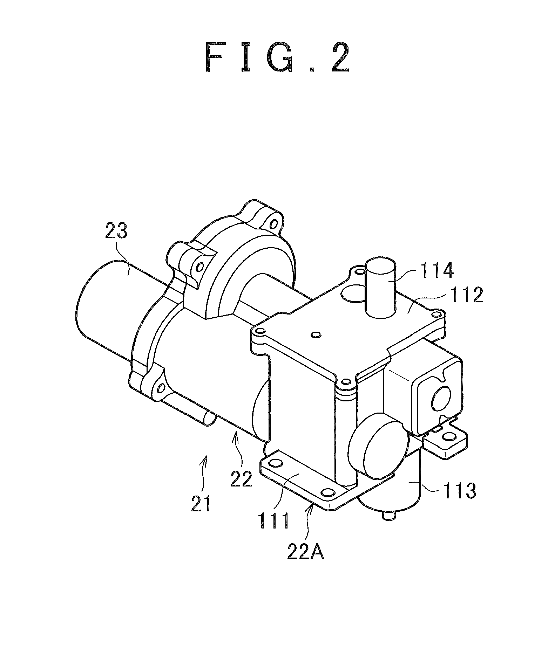

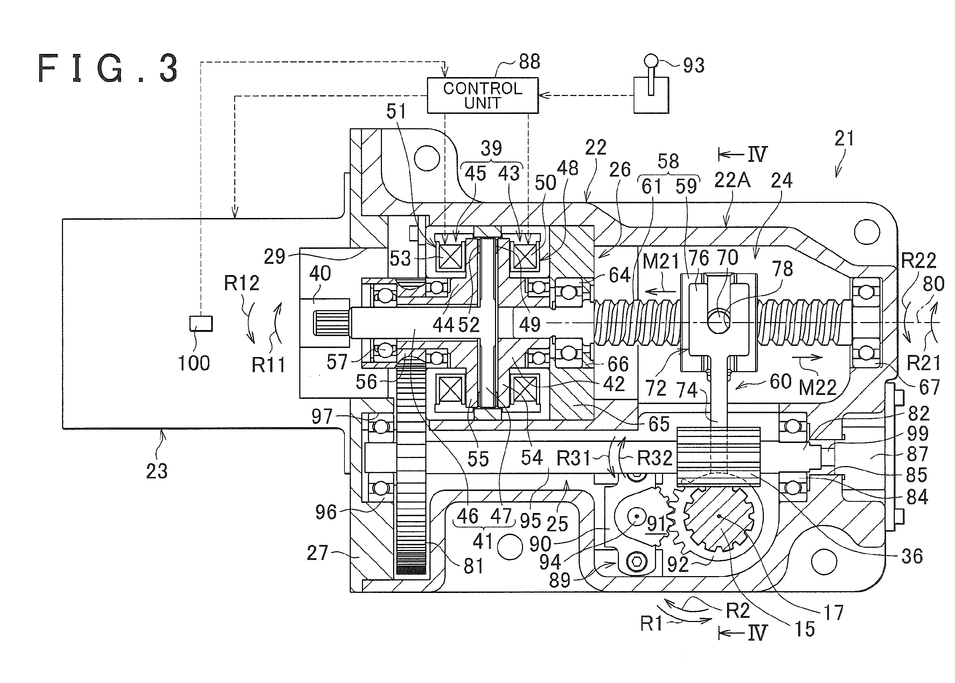

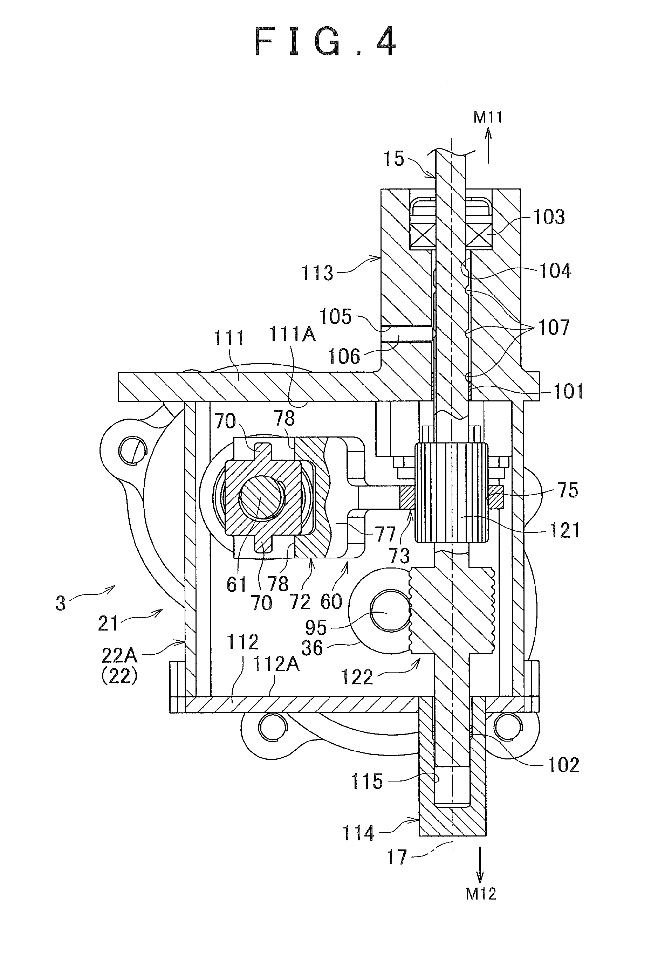

FIG. 2 is a perspective view that shows the configuration of the transmission actuating device 3 (the electric actuator 21). FIG. 3 is a sectional view that shows the configuration of the transmission actuating device 3. FIG. 4 is a sectional view taken along the line IV-IV in FIG. 3. Note that, in FIG. 2, the shift select shaft 15 is not shown. Hereinafter, the configuration of the electric actuator 21 will be described with reference to FIG. 2 to FIG. 4. The electric actuator 21 includes a closed-end substantially cylindrical housing 22. The electric actuator 21 is fixed to the outer surface of the gear housing 7 (see FIG. 1) or a predetermined portion of the vehicle.

The electric actuator 21 includes an electric motor 23, a shift conversion mechanism (shift driving mechanism) 24, a select conversion mechanism (select driving mechanism) 25, and a switching unit 26. The electric motor 23 is, for example, a brushless electric motor. The shift conversion mechanism 24 converts rotary torque (rotational driving force), generated by the electric motor 23, into force that rotates the shift select shaft 15 about its axis. The select conversion mechanism 25 converts rotary torque, generated by the electric motor 23, into force that moves the shift select shaft 15 in the first axial direction M11 or the second axial direction M12. The switching unit 26 allows or interrupts transmission of rotary torque, generated by the electric motor 23, to the shift conversion mechanism 24 and/or the select conversion mechanism 25. The shift conversion mechanism 24, the select conversion mechanism 25 and the switching unit 26 are accommodated in the housing 22.

An opening portion (left side shown in FIG. 3) of the housing 22 is closed by a substantially plate-like lid 27. The housing 22 and the lid 27 each are made of a metal material, such as casting iron and aluminum. The outer periphery of the lid 27 is fitted to the opening portion of the housing 22. A circular through-hole 29 is formed in the lid 27. The through-hole 29 extends from the inner surface (right surface shown in FIG. 3) to the outer surface (left surface shown in FIG. 3). In addition, a body casing of the electric motor 23 is fixed to the outer surface of the lid 27. The electric motor 23 is rotatable in a forward direction and a reverse direction, that is, the first rotation direction R11 and the second rotation direction R12 (e.g. reverse direction). The first rotation direction R11 is a clockwise direction, when viewed from the motor output shaft side, and is referred to as "CW". The second rotation direction R12 is a counterclockwise direction, when viewed from the motor output shaft, and is referred to as "CCW". For example, a brushless electric motor is employed as the electric motor 23. The body casing of the electric motor 23 is attached so as to be exposed on the outside of the housing 22. An output shaft 40 of the electric motor 23 is arranged so as to be neither parallel to nor intersecting with the shift select shaft 15 such that, when viewed from above, the output shaft 40 and the shift select shaft 15 form an angle of 90 degrees. The output shaft 40 extends in a predetermined direction (lateral direction shown in FIG. 3) perpendicular to the axial directions M11, M12 (see FIG. 4). The output shaft 40 faces the inside the housing 22 via the through-hole 29 of the lid 27, and faces the switching unit 26. A resolver (motor rotation angle detection means) 100, which is an example of motor rotation angle detection means for detecting the rotation angle of the electric motor 23, is incorporated in the electric motor 23.

As shown in FIG. 4, the housing 22 includes a distal end-side portion (lower end-side portion shown in FIG. 4) of the shift select shaft 15 and a substantially box-shaped main housing 22A. The main housing 22A mainly accommodates components of the shift conversion mechanism 24. The main housing 22A includes a first side wall 111 (see FIG. 4), a second side wall 112 (see FIG. 4), a first shaft holder 113 (see FIG. 4), and a second shaft holder 114 (see FIG. 4). The first shaft holder 113 supports a base end-side portion of the shift select shaft 15. The second shaft holder 114 accommodates and supports the distal end portion of the shift select shaft 15.

The inner side surface of the first side wall 111 is a first inner wall surface 111A (see FIG. 4) formed of a flat surface. The inner side surface of the second side wall 112 is a second inner wall surface 112A (see FIG. 4) formed of a flat surface. The second inner wall surface 112A faces the first inner wall surface 111A, and is parallel to the first inner wall surface 111A. The first shaft holder 113 is formed so as to protrude outward from the outer wall surface (surface on the opposite side of the first side wall 111 from the first inner wall surface 111A) of the first side wall 111, and is formed in, for example, a cylindrical shape. The first shaft holder 113 is integrally formed with the first side wall 111. An insertion hole 104 having a circular cross section is formed in the first shaft holder 113 and the first side wall 111. The insertion hole 104 extends through the first shaft holder 113 and the first side wall 111 in their thickness direction (up-down direction in FIG. 4). The shift select shaft 15 is passed through the insertion hole 104.

A first plain bearing 101 (see FIG. 4) is fixedly fitted onto the inner peripheral wall of the insertion hole 104. The first plain bearing 101 surrounds the outer periphery of a middle portion of the shift select shaft 15 (a portion slightly closer to the based end than the distal end portion) that is passed through the insertion hole 104, and supports the outer periphery of the middle portion of the shift select shaft 15 so as to be in sliding contact with the outer periphery of the middle portion. The second shaft holder 114 is formed so as to protrude outward from the outer wall surface (surface on the opposite side of the second side wall 112 from the second inner wall surface 112A) of the second side wall 112, and is formed in, for example, a substantially cylindrical shape. The second shaft holder 114 is integrally formed with the second side wall 112. A columnar distal end portion accommodating groove 115 (see FIG. 4) is defined by the inner periphery and the bottom face of the second shaft holder 114. The distal end portion accommodating groove 115 accommodates the distal end portion (lower end portion in FIG. 4) of the shift select shaft 15. The inner peripheral wall of the distal end portion accommodating groove 115 is formed in a cylindrical shape having a central axis coaxial with the cylindrical insertion hole 104.

A second plain bearing 102 (see FIG. 4) is fixedly fitted onto the inner peripheral wall of the distal end portion accommodating groove 115. The second plain bearing 102 surrounds the outer periphery of the distal end portion of the shift select shaft 15 accommodated in the distal end portion accommodating groove 115, and supports the outer periphery of the distal end portion so as to be in sliding contact with the outer periphery of the distal end portion. The shift select shaft 15 is supported by the first plain bearing 101 and the second plain bearing 102 so as to be rotatable around its central axis 17 and movable in the axial directions M11, M12.

A seal member 103 is provided at a portion on the outer side of the first plain bearing 101 in the insertion hole 104 to seal the clearance between the inner peripheral wall of the insertion hole 104 and the outer periphery of the shift select shaft 15 so that dust or dirt does not enter the housing 22 (main housing 22A). A lock pole 106 is arranged in the first shaft holder 113, at a position between the seal member 103 and the first plain bearing 101 in the thickness direction (up-down direction in FIG. 4). Specifically, the lock pole 106 is accommodated in a through-hole 105 that extends from the inner peripheral wall of the insertion hole 104 to the outer periphery of the first shaft holder 113. The lock pole 106 extends in a direction perpendicular to the central axis of the columnar distal end portion accommodating groove 115 (that is, the central axis 17 of the shift select shaft 15) (perpendicular direction), has a substantially cylindrical shape, and is provided so as to be movable along the above-described direction (perpendicular direction). The distal end portion of the lock pole 106 has a semi-spherical shape, and is engaged with one of engaging grooves 107 described below.

A plurality of (for example, three) engaging grooves 107 is formed on the outer periphery of the shift select shaft 15 at intervals in the axial directions M11, M12 so as to extend in the circumferential direction of the shift select shaft 15. Each engaging groove 107 is formed all around the shift select shaft 15. As the lock pole 106 moves in its longitudinal direction, the distal end portion protrudes toward the central axis 17 (rightward in FIG. 4) beyond the inner peripheral wall of the insertion hole 104 to be engaged with one of the engaging grooves 107. In this way, the lock pole 106 prohibits movement of the shift select shaft 15 in the axial directions M11, M12. As a result, the shift select shaft 15 is held with a constant force with the movement in the axial directions M11, M12 prohibited.

In a portion of the outer periphery of the shift select shaft 15 between a portion which is in sliding contact with the first plain bearing 101 and a portion which is in sliding contact with the second plain bearing 102, external splines 121 (see FIG. 4) and a rack 122 (described later) (see FIG. 4) are formed in this order from the first plain bearing 101 side. A pinion 36 is in mesh with the rack 122. As shown in FIG. 3, the switching unit 26 includes a transmission shaft 41, a first rotor 42, a second rotor 44 and a clutch mechanism 39. The transmission shaft 41 is coaxially coupled to the output shaft 40 of the electric motor 23. The first rotor 42 is provided coaxially with the transmission shaft 41 so as to be rotatable together with the transmission shaft 41. The second rotor 44 is provided coaxially with the transmission shaft 41 so as to be rotatable together with the transmission shaft 41. The clutch mechanism 39 switches the element, to which the transmission shaft 41 is coupled, between the first rotor 42 and the second rotor 44.

The transmission shaft 41 includes a small-diameter main shaft portion 46 and a large-diameter portion 47. The small-diameter main shaft portion 46 is provided on the electric motor 23 side. The large-diameter portion 47 is provided integrally with the main shaft portion 46, at an axial end portion (right end portion in FIG. 3), on the first rotor 42 side, of the main shaft portion 46, and is larger in diameter than the main shaft portion 46. The first rotor 42 is arranged on the opposite side of the transmission shaft 41 from the electric motor 23. The first rotor 42 has a first armature hub 54 that projects radially outward from the outer periphery of the axial end portion (left end portion in FIG. 3) on the electric motor 23 side. The first armature hub 54 is arranged so as to face the surface (right surface in FIG. 3) of the large-diameter portion 47, which is on the opposite side of the large-diameter portion 47 from the electric motor 23.

The second rotor 44 is arranged on the opposite side of the large-diameter portion 47 of the transmission shaft 41 from the first rotor 42, that is, arranged on the electric motor 23 side. The second rotor 44 surrounds the main shaft portion 46 of the transmission shaft 41. The second rotor 44 has a second armature hub 55 that projects radially outward from the outer periphery of the axial end portion (right end portion in FIG. 3), which is on the opposite side of the second rotor 44 from the electric motor 23. The second armature hub 55 is arranged so as to face the surface (left surface in FIG. 3) of the large-diameter portion 47, which is on the electric motor 23 side. In other words, (the first armature hub 54 of) the first rotor 42 and (the second armature hub 55 of) the second rotor 44 are arranged so as to sandwich the large-diameter portion 47 of the transmission shaft 41 therebetween.

The clutch mechanism 39 includes a shift electromagnetic clutch 43 and a select electromagnetic clutch (second clutch) 45. The shift electromagnetic clutch 43 is connected to or disconnected from the first rotor 42 to couple or remove the transmission shaft 41 to or from the first rotor 42. The select electromagnetic clutch 45 is connected to or disconnected from the second rotor 44 to couple or remove the transmission shaft 41 to or from the second rotor 44. The shift electromagnetic clutch 43 includes a first field 48 and a first armature 49. The first armature 49 is arranged on the other axial side face (right surface in FIG. 3) of the large-diameter portion 47 of the transmission shaft 41 with a small clearance left between the first armature 49 and the surface, on the electric motor 23 side (left surface in FIG. 3), of the first armature hub 54, and is formed in a substantially annular plate shape. The first armature 49 is made of a ferromagnetic material, such as iron. The first field 48, in which a first electromagnetic coil 50 is incorporated in the yoke, is fixed to the housing 22.

The select electromagnetic clutch 45 includes a second field 51 and a second armature 52. The second armature 52 is arranged on one axial side face (left surface in FIG. 3) of the large-diameter portion 47 of the transmission shaft 41 with a small clearance left between the second armature 52 and the surface (right surface in FIG. 3) of the second armature hub 55, which is on the opposite side of the second armature hub 55 from the electric motor 23, and is formed in a substantially annular plate shape. The second armature 52 is made of a ferromagnetic material, such as iron. The second field 51, in which a second electromagnetic coil 53 is incorporated in the yoke, is fixed to the housing 22. The first field 48 and the second field 51 are arranged next to each other along the axial direction such that the large-diameter portion 47, the first armature hub 54 and the second armature hub 55 are interposed between the first field 48 and the second field 51.

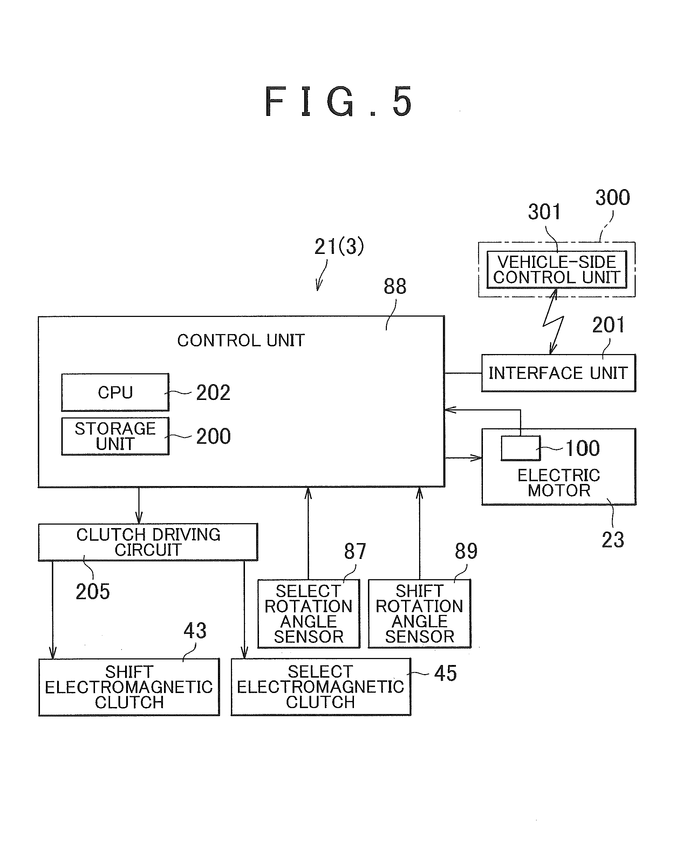

A clutch driving circuit 205 (described later; see FIG. 5) used to drive the shift electromagnetic clutch 43 and the select electromagnetic clutch 45 is connected thereto. The clutch driving circuit 205 is supplied with voltage (supplied with electric power) from a power supply (not shown) via, for example, wiring. The clutch driving circuit 205 is configured to include a relay circuit, and the like. The clutch driving circuit 205 is provided so as to be able to individually supply electric power or stop supply of electric power to the shift electromagnetic clutch 43 and the select electromagnetic clutch 45. Note that the configuration of the clutch driving circuit 205 is not limited to the configuration for driving both the shift electromagnetic clutch 43 and the select electromagnetic clutch 45. Alternatively, as the clutch driving circuit 205, a clutch driving circuit for driving the shift electromagnetic clutch 43 and a clutch driving circuit for driving the select electromagnetic clutch 45 may be separately provided. The shift clutch driving circuit drives the shift electromagnetic clutch 43. The select clutch driving circuit drives the select electromagnetic clutch 45.

As the first electromagnetic coil 50 is energized by supplying electric power to the shift electromagnetic clutch 43 via the clutch driving circuit 205, the first electromagnetic coil 50 is placed in an excited state. Thus, electromagnetic attraction force is generated in the first field 48 that includes the first electromagnetic coil 50. Then, the first armature 49 is attracted to the first field 48 to be deformed toward the first field 48. As a result, the first armature 49 frictionally contacts the first armature hub 54. Thus, as the first electromagnetic coil 50 is energized, the first electromagnetic coil 50 is connected (coupled) to the first rotor 42, and the transmission shaft 41 is coupled to the first rotor 42. Then, supply of voltage to the first electromagnetic coil 50 is stopped and current does not flow through the first electromagnetic coil 50. Thus, attraction force for attracting the first armature 49 is no longer generated, so the first armature 49 returns to an original shape. Thus, the first electromagnetic coil 50 separates from the first rotor 42, and the transmission shaft 41 is removed from the first rotor 42. That is, by switching the state of power supply to the first electromagnetic coil 50 between the power supply state and the power supply stopped state, it is possible to allow or interrupt transmission of rotary torque from the electric motor 23 to the first rotor 42.

On the other hand, as the second electromagnetic coil 53 is energized by supplying electric power to the select electromagnetic clutch 45 via the clutch driving circuit 205, the second electromagnetic coil 53 is placed in an excited state. Thus, electromagnetic attraction force is generated in the second field 51 that includes the second electromagnetic coil 53. Then, the second armature 52 is attracted to the second field 51 to be deformed toward the second field 51. As a result, the second armature 52 frictionally contacts the second armature hub 55. Thus, as the second electromagnetic coil 53 is energized, the second electromagnetic coil 53 is connected (coupled) to the second rotor 44, and the transmission shaft 41 is coupled to the second rotor 44. Then, supply of voltage to the second electromagnetic coil 53 is stopped and current does not flow through the second electromagnetic coil 53. Thus, attraction force for attracting the second armature 52 is no longer generated, and the second armature 52 returns to an original shape. Thus, the second electromagnetic coil 53 separates from the second rotor 44, and the transmission shaft 41 is removed from the second rotor 44. That is, by switching the state of power supply to the second electromagnetic coil 53 between the power supply state and the power supply stopped state, it is possible to allow or interrupt transmission of rotary torque from the electric motor 23 to the second rotor 44.

An annular small-diameter first gear 56 is fixedly fitted onto the outer periphery of the second rotor 44. The first gear 56 is provided coaxially with the second rotor 44. The first gear 56 is supported by a rolling bearing 57. An outer ring of the rolling bearing 57 is fixedly fitted onto the inner periphery of the first gear 56. An inner ring of the rolling bearing 57 is fixedly fitted onto the outer periphery of the main shaft portion 46 of the transmission shaft 41. The shift conversion mechanism 24 includes a ball screw mechanism 58 and an arm 60. The ball screw mechanism 58 converts a rotational motion into a linear motion. The arm 60 pivots about the central axis 17 of the shift select shaft 15 as a nut 59 of the ball screw mechanism 58 moves in the axial direction.

The ball screw mechanism 58 includes a screw shaft 61 and the nut 59. The screw shaft 61 extends coaxially with the first rotor 42 (that is, coaxially with the transmission shaft 41). The nut 59 is screwed to the screw shaft 61 via balls (not shown). The screw shaft 61 is arranged so as to be neither parallel to nor intersecting with the shift select shaft 15 such that, when viewed from above, the screw shaft 61 and the shift select shaft 15 form an angle of 90°. In other words, when viewed from a direction perpendicular to both the axial direction of the screw shaft 61 and the axial directions M11, M12 of the shift select shaft 15, the screw shaft 61 and the shift select shaft 15 are perpendicular to each other.

The screw shaft 61 is supported by rolling bearings 64, 67 while movement of the screw shaft 61 in the axial direction is restricted. Specifically, one end portion (left end portion in FIG. 3) of the screw shaft 61 is supported by the rolling bearing 64, and the other end portion (right end portion in FIG. 3) of the screw shaft 61 is supported by the rolling bearing 67. The screw shaft 61 is supported by the rolling bearings 64, 67 so as to be rotatable about its central axis 80.

An inner ring of the rolling bearing 64 is fixedly fitted onto one end portion of the screw shaft 61. In addition, an outer ring of the rolling bearing 64 is fitted into a through-hole that passes through a bottom wall 65 of the casing of the switching unit 26 fixed to the housing 22, so as to extend from the inner surface to the outer surface of the bottom wall 65. In addition, a lock nut 66 is engaged with the outer ring of the rolling bearing 64 to restrict movement of the rolling bearing 64 toward the other side (right side in FIG. 3) in the axial direction of the screw shaft 61. A part of one end portion of the screw shaft 61, which is on the electric motor 23 side (left side in FIG. 3) with respect to the rolling bearing 64, is passed through the inner periphery of the first rotor 42, and is coupled to the first rotor 42 so as to be rotatable together with the first rotor 42. The outer ring of the rolling bearing 67 is fixed to the housing 22.

Columnar protruding shafts 70 (only one of them is shown in FIG. 3; see also FIG. 4) are respectively formed to extend from one side surface (side surface closer to the reader in the direction perpendicular to the sheet on which FIG. 3 is drawn; the lower side surface in FIG. 4) of the nut 59 and the other side surface (side surface farther from the reader in the direction perpendicular to the sheet on which FIG. 3 is drawn; the upper side surface in FIG. 4) that is on the opposite side of the nut 59 from the one side surface. The protruding shafts 70 each extend in the direction along the axial directions M11, M12 of the shift select shaft 15 (direction perpendicular to the sheet on which FIG. 3 is drawn; the up-down direction in FIG. 4). The protruding shafts 70 are coaxial with each other. Rotation of the nut 59 around the screw shaft 61 is restricted by a first engaging portion 72 of the arm 60. Therefore, as the screw shaft 61 is rotated, the nut 59 moves in the axial direction of the screw shaft 61 in accordance with the rotation of the screw shaft 61. Note that FIG. 4 shows a sectional state where the nut 59 is located at a position that is deviated from the position of the nut 59 shown in FIG. 3 in a direction away from the first rotor 42 (rightward in FIG. 3) along the axial direction of the screw shaft 61.

The arm 60 includes the first engaging portion 72, a second engaging portion 73 (see FIG. 4) and a linear connecting rod 74. The first engaging portion 72 is engaged with the nut 59. The second engaging portion 73 is spline-fitted to the shift select shaft 15. The connecting rod 74 connects the first engaging portion 72 to the second engaging portion 73. The connecting rod 74 has, for example, a rectangular shape in cross section over its entire length. The second engaging portion 73 has a substantially cylindrical shape, and is fitted onto the shift select shaft 15.

The first engaging portion 72 has a pair of support plate portions 76 and a coupling plate portion 77. The support plate portions 76 face each other. The coupling plate portion 77 couples the base end sides (lower end sides shown in FIG. 3 and right end sides shown in FIG. 4) of the support plate portions 76. The first engaging portion 72 has a substantially U-shape in side view. Each support plate portion 76 has a U-shaped engaging groove 78. The U-shaped engaging groove 78 is engaged with the outer periphery of a corresponding one of the protruding shafts 70 while allowing rotation of the corresponding one of the protruding shafts 70. Each U-shaped engaging groove 78 is a cutout that extends from the distal end side that is on the opposite side of the first engaging portion 72 from the base end side. Therefore, the first engaging portion 72 is engaged with the nut 59 so as to be rotatable relative to the nut 59 around the protruding shafts 70 and movable together with the nut 59 in the axial direction of the screw shaft 61. In addition, due to engagement of each U-shaped engaging groove 78 and a corresponding one of the protruding shafts 70, rotation of the nut 59 around the screw shaft 61 is restricted by the first engaging portion 72 of the arm 60. Therefore, in accordance with the rotation of the screw shaft 61, the nut 59 and the first engaging portion 72 move in the axial direction of the screw shaft 61. The second engaging portion 73 has, for example, an annular plate shape. Alternatively, the second engaging portion 73 may have a cylindrical shape.

The outer periphery of the shift select shaft 15 is spline-fitted to the inner periphery of the second engaging portion 73. Specifically, external splines 121 formed on the outer periphery of the shift select shaft 15 are in mesh with internal splines 75 formed in the inner periphery of the second engaging portion 73. At this time, a clearance for meshing is formed between the external splines 121 and the internal splines 75. In other words, the second engaging portion 73 is coupled to the outer periphery of the shift select shaft 15 so as to be non-rotatable relative to the shift select shaft 15 and movable relative to the shift select shaft 15 in the axial direction. Therefore, as the screw shaft 61 rotates and, accordingly, the nut 59 moves in the axial direction of the screw shaft 61, the arm 60 pivots about the central axis 17 of the shift select shaft 15, and the shift select shaft 15 rotates in accordance with the pivot motion of the arm 60.

The select conversion mechanism 25 includes the first gear 56, a pinion shaft 95, a second gear 81 and the small-diameter pinion 36. The pinion shaft 95 extends parallel to the transmission shaft 41, and is provided so as to be rotatable. The second gear 81 is coaxially fixed to the pinion shaft 95 at a predetermined position close to one end portion (left end portion in FIG. 3) of the pinion shaft 95. The pinion 36 is coaxially fixed to the pinion shaft 95 at a predetermined position close to the other end portion (right end portion in FIG. 3) of the pinion shaft 95. The select conversion mechanism 25 constitutes a speed reducer as a whole. Note that the second gear 81 is formed to be larger in diameter than both the first gear 56 and the pinion 36.

One end portion (left end portion in FIG. 3) of the pinion shaft 95 is supported by a rolling bearing 96 fixed to the housing 22. An inner ring of the rolling bearing 96 is fixedly fitted onto one end portion (left end portion in FIG. 3) of the pinion shaft 95. In addition, the outer ring of the rolling bearing 96 is fixed in a cylindrical recess 97 formed on the inner surface of the lid 27. In addition, the other end portion (right end portion in FIG. 3) of the pinion shaft 95 is supported by a rolling bearing 84. The pinion 36 and the rack 122 are in mesh with each other through rack-and-pinion. With this configuration, as the pinion shaft 95 rotates in accordance with the rotation of the transmission shaft 41, the shift select shaft 15 moves in the axial directions M11, M12 accordingly.

A select rotation angle sensor (axial displacement detecting means) 87 that detects the rotation angle of the pinion shaft 95 is arranged at the other end portion 82 (the right end portion in FIG. 3) of the pinion shaft 95. A sensor hole 85 is formed in the bottom wall (the wall on the opposite side of the housing 22 from the lid 27; right wall in FIG. 3) of the housing 22, and passes through the bottom wall from the inner face to the outer face. The select rotation angle sensor 87 includes a sensor portion (not shown) and a first sensor shaft 99 that is coupled to the sensor portion. The distal end portion of the first sensor shaft 99 is coupled to the other end portion 82 of the pinion shaft 95 through the sensor hole 85 so as to be rotatable together with the pinion shaft 95. As the pinion shaft 95 rotates, the first sensor shaft 99 rotates about its axis together with the pinion shaft 95. The select rotation angle sensor 87 detects the rotation angle of the pinion shaft 95 on the basis of the rotation angle of the first sensor shaft 99.

In addition, a shift rotation angle sensor (shaft rotation angle detecting means) 89 that detects the rotation angle of the shift select shaft 15 is provided in the housing 22. The shift rotation angle sensor 89 includes a body 90, a second sensor shaft 94 and a sector gear 91. A sensor portion (not shown) is incorporated in the body 90. The second sensor shaft 94 is coupled to the sensor portion of the body 90 so as to be rotatable together with the sensor portion. The sector gear 91 is fixedly fitted onto the second sensor shaft 94. The sector gear 91 is in mesh with a sensor gear 92 that is provided so as to be rotatable together with (fixedly fitted onto) the shift select shaft 15. As the shift select shaft 15 rotates about its axis, the sensor gear 92 and the sector gear 91 rotate together with the shift select shaft 15, and, accordingly, the second sensor shaft 94 rotates about its axis. The shift rotation angle sensor 89 detects the rotation angle of the shift select shaft 15 on the basis of the rotation angle of the second sensor shaft 94.

FIG. 5 is a block diagram that shows the electrical configuration of the transmission actuating device 3. The transmission actuating device 3 includes a control unit (additional rotation control means, additional axial displacement control means) 88 formed of, for example, a microcomputer. The control unit 88 includes a CPU 202 and a storage unit 200. The storage unit 200 stores a first motor angle conversion coefficient that is used to convert a detection result output from the shift rotation angle sensor 89 into a motor angle. The motor angle is the rotation angle of the electric motor 23, corresponding to the rotation angle of the shift select shaft 15. The storage unit 200 also stores a second motor angle conversion coefficient that is used to convert a detection result output from the select rotation angle sensor 87 into a motor angle. The motor angle is the rotation angle of the electric motor 23, corresponding to the rotation angle of the pinion shaft 95. In addition, the storage unit 200 stores a first threshold and a second threshold. The first threshold defines a range between a converted shift detected angle (described later) and an angle detected by a resolver 100. The second threshold defines a range between a converted select detected angle (described later) and an angle detected by the resolver 100.

The electric motor 23 is connected, as a control target, to the control unit 88 via an electric motor driver (not shown). In addition, the shift electromagnetic clutch 43 and the select electromagnetic clutch 45 are connected, as control targets, to the control unit 88 via the clutch driving circuit 205. Furthermore, the control unit 88 executes drive control over the shift electromagnetic clutch 43 and the select electromagnetic clutch 45 via the clutch driving circuit 205.

The detection results output from the resolver 100, select rotation angle sensor 87 and shift rotation angle sensor 89 are input into the control unit 88. The control unit 88 is able to obtain the axial position of the shift select shaft 15 on the basis of the detection result output from the select rotation angle sensor 87, and is able to obtain the rotation angle of the shift select shaft 15 on the basis of the detection result output from the shift rotation angle sensor 89.

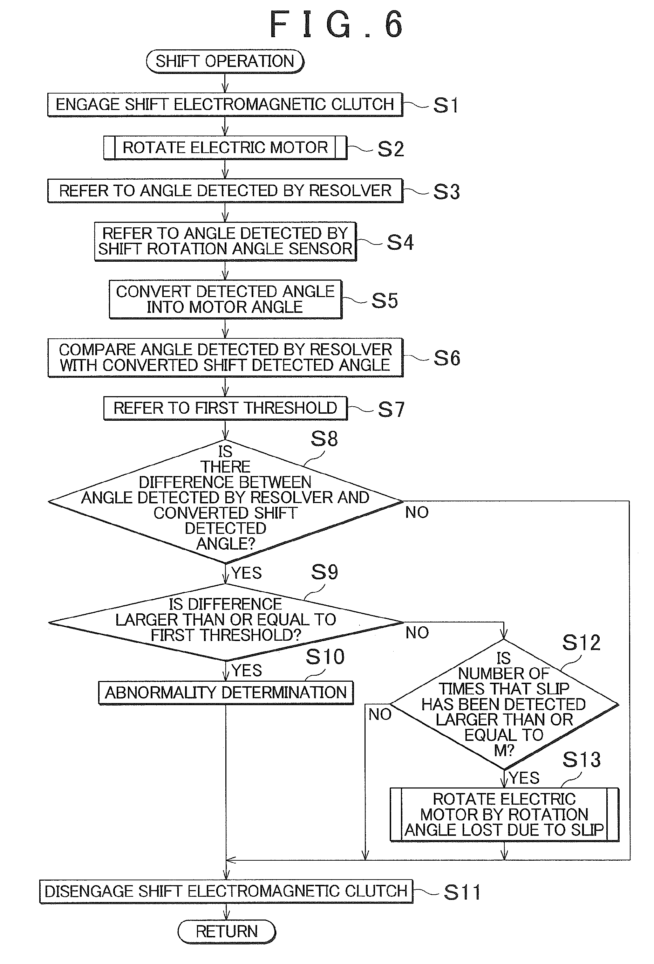

The control unit 88 is provided so as to be able to communicate with a vehicle-side control unit 301 via an interface unit 201. The vehicle-side control unit 301 is used to control a vehicle 300. An electronic control unit (ECU) may be an example of the control unit 88. FIG. 6 is a flowchart that shows shift operation control. The shift operation control will be described with reference to FIG. 3 and FIG. 6.

During a shift operation, the shift electromagnetic clutch 43 is engaged and the select electromagnetic clutch 45 is disengaged (step S1), and the electric motor 23 is rotated in a desired one of the rotation direction R11 and the rotation direction R12 by a predetermined rotation amount (step S2). The rotation angle of the electric motor 23 during the shift operation is detected by the resolver 100. In accordance with the rotation of the electric motor 23, the first rotor 42 rotates about an axis that is coaxial with the output shaft 40 of the electric motor 23, and, accordingly, the screw shaft 61 rotates in a rotation direction R21 or a rotation direction R22 about its axis (about the central axis 80). In addition, in accordance with the rotation of the screw shaft 61, the nut 59 of the shift conversion mechanism 24 moves in an axial direction M21 or axial direction M22 of the screw shaft 61, and, in accordance with the axial movement of the nut 59, the arm 60 pivots about the shift select shaft 15. The second engaging portion 73 of the arm 60 is coupled to the outer periphery of the shift select shaft 15 so as to be non-rotatable relative to the shift select shaft 15. Therefore, in accordance with a pivot motion of the arm 60, the shift select shaft 15 rotates in the first rotation direction R1 (also see FIG. 1) or in the second rotation direction R2 (also see FIG. 1). In accordance with the rotation of the shift select shaft 15, the internal lever 16 rotates about the shift select shaft 15. Thus, one of the fork shafts 10A, 10B, 10C, which is coupled to the internal lever 16, axially moves in a corresponding one of the axial directions M1, M3, M5 (see FIG. 1) or a corresponding one of the axial directions M2, M4, M6 (see FIG. 1). The rotation angle of the shift select shaft 15 during a shift operation is detected by the shift rotation angle sensor 89.

After the electric motor 23 rotates by a predetermined rotation angle, the control unit 88 refers to the angle detected by the resolver 100 (step S3). In addition, the control unit 88 refers to the angle detected by the shift rotation angle sensor 89 (step S4), and converts the detected angle to a motor angle (the rotation angle of the electric motor 23, corresponding to the rotation angle of the shift select shaft 15) on the basis of the first motor angle conversion coefficient stored in the storage unit 200 (step S5). Then, the control unit 88 compares the converted detected angle (hereinafter, may be simply referred to as "converted shift detected angle") detected by the shift rotation angle sensor 89 with the rotation angle of the electric motor 23 (step S6), and calculates a difference between the converted shift detected angle and the angle detected by the resolver 100. In addition, the control unit 88 refers to the first threshold stored in the storage unit 200 (step S7).

When the difference between the converted shift detected angle and the angle detected by the resolver 100 is not zero and the difference is larger than or equal to the first threshold stored in the storage unit 200 (YES in step S8 and YES in step S9), it is considered that a large slip has occurred in the shift electromagnetic clutch 43. Therefore, the control unit 88 determines that an abnormality has occurred in the shift electromagnetic clutch 43 (step S10), and transmits a signal indicating that the abnormality has occurred to the vehicle-side control unit 301 of the vehicle through the interface unit 201 (step S11).

When the difference between the converted shift detected angle and the angle detected by the resolver 100 is not zero but the difference is smaller than the first threshold stored in the storage unit 200 (YES in step S8 and NO in step S9), the electric motor 23 is controlled to cause the shift select shaft 15 to perform an additional shift operation. Specifically, the shift select shaft 15 is additionally rotated by a rotation angle lost due to the slip of the shift electromagnetic clutch 43 (step S13).

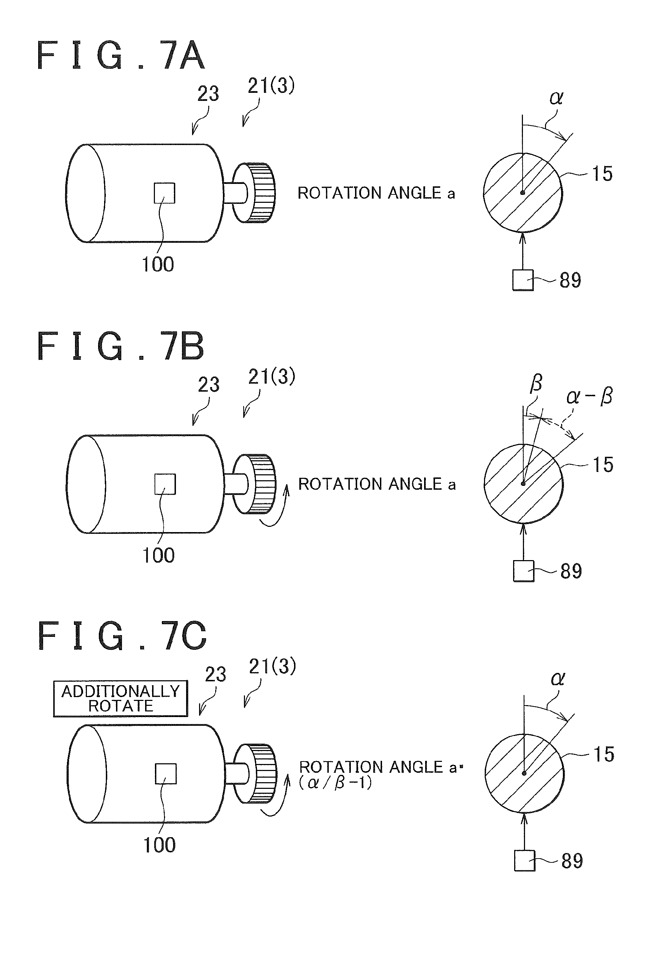

FIG. 7A to FIG. 7C are schematic views for illustrating the details of the additional shift operation. The following additional shift operation will be described with reference to FIG. 6 and FIG. 7A to FIG. 7C. The description will be provided on the assumption that, for example, it is necessary to rotate the electric motor 23 by a rotation angle "a" in order to rotate the shift select shaft 15 by a rotation angle "α" (that is, the motor angle of "α" is "a"), as shown in FIG. 7A.

However, in this case, there is a possibility that there is a slip in the shift electromagnetic clutch 43, the shift select shaft 15 actually rotates only by a rotation angle "β (< α)" as shown in FIG. 7B, and there occurs a difference "α - β" between the desired rotation angle of the shift select shaft 15 and the actual rotation angle of the shift select shaft 15. When the motor angle corresponding to the rotation angle "β" of the shift select shaft 15 is smaller than the first threshold stored in the storage unit 200, an additional shift operation is performed, and the shift select shaft 15 is additionally rotated by a rotation angle corresponding to "α - β" (rotation angle lost due to the slip of the shift electromagnetic clutch 43). At this time, the rotation angle of the electric motor 23 is determined in consideration of the slip of the shift electromagnetic clutch 43. That is, although the motor angle corresponding to "α - β" is originally a•(α-β)/α, a slip has occurred in the shift electromagnetic clutch 43 and therefore the shift select shaft 15 rotates by only the angle β with respect to the rotation angle a of the electric motor 23. In this case, as shown in FIG. 7C, the control unit 88 rotates the electric motor 23 by the rotation angle of a•(α-β)/β (that is, a•(α/β-1)).

When a slip of the shift electromagnetic clutch 43 has accidentally occurred and there is almost no likelihood of occurrence of such a slip thereafter, it may be considered that it is not necessary to compensate for the rotation of the shift select shaft 15, which is lost due to the slip. Therefore, in the present embodiment, if the difference between the converted shift detected angle and the angle detected by the resolver 100 is not zero but the difference is smaller than the first threshold stored in the storage unit 200 (YES in step S8 and NO in step S9), only when the number of times that such an amount of slip has been detected is M (for example, three) or more (YES in step S12), the electric motor 23 is controlled such that the shift select shaft 15 is additionally rotated by the rotation angle lost due to the slip of the shift electromagnetic clutch 43 (step S13). Therefore, even when the difference between the converted shift detected angle and the angle detected by the resolver 100 is not zero but the difference is smaller than the first threshold stored in the storage unit 200 (YES in step S8 and NO in step S9), if the number of times that such an amount of slip has been detected is smaller than M (for example, one or two) (NO in step S12), the rotation of the shift select shaft 15, which is lost due to the slip, is not compensated for.

Thus, the amount of a slip of the shift electromagnetic clutch 43 is calculated on the basis of the rotation angle of the electric motor 23 and the rotation angle of the shift select shaft 15 about its axis. Then, the electric motor 23 is subjected to rotation control so as to additionally rotate the shift select shaft 15 (cause the shift select shaft 15 to perform an additional shift operation) by the rotation angle lost due to the slip of the shift electromagnetic clutch 43. Thus, when a slip of the shift electromagnetic clutch 43 has occurred, the rotation amount of the shift select shaft 15, lost due to the slip, is compensated for. Therefore, irrespective of whether a slip of the shift electromagnetic clutch 43 has occurred, it is possible to always perform a gear shift operation through the rotation of the shift select shaft 15 appropriately.

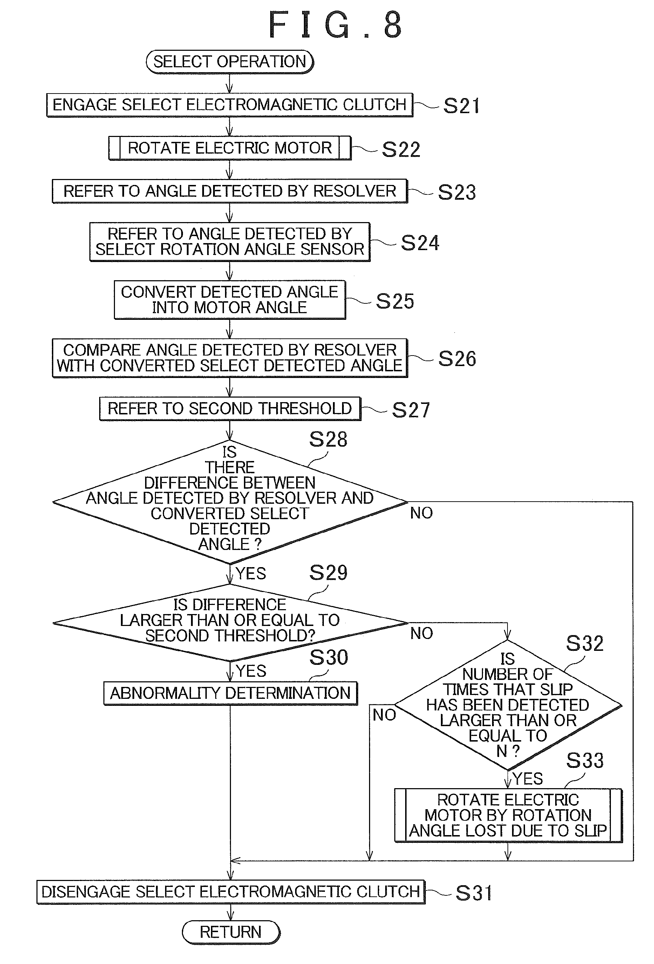

FIG. 8 is a flowchart that shows a select operation control. The select operation control will be described with reference to FIG. 3 and FIG. 8. During a select operation, the select electromagnetic clutch 45 is engaged and the shift electromagnetic clutch 43 is disengaged (step S21), and the electric motor 23 is rotated in a desired one of the rotation direction R11 and the rotation direction R12 by a predetermined rotation amount (step S22). The rotation angle of the electric motor 23 during the select operation is detected by the resolver 100. Then, in accordance with the rotation of the electric motor 23, the second rotor 44 rotates about an axis coaxial with the output shaft 40 of the electric motor 23, and, accordingly, the pinion shaft 95 rotates in a rotation direction R31 or a rotation direction R32 about its axis. In accordance with the rotation of the pinion shaft 95, the shift select shaft 15 that is engaged with the pinion shaft 95 by rack-and-pinion axially moves in the first axial direction M11 or in the second axial direction M12. The axial displacement of the shift select shaft 15 during the select operation is not directly detected, but the axial displacement is calculated on the basis of the rotation angle of the pinion shaft 95 that is engaged with the shift select shaft 15. The rotation angle of the pinion shaft 95 is detected by the select rotation angle sensor 87.

After the electric motor 23 rotates by a predetermined rotation angle, the control unit 88 refers to the angle detected by the resolver 100 (step S23). In addition, the control unit 88 refers to the angle detected by the select rotation angle sensor 87 (step S24), and converts the detected angle to a motor angle on the basis of the second motor angle conversion coefficient stored in the storage unit 200 (step S25). The motor angle is the rotation angle of the electric motor 23, corresponding to the rotation angle of the pinion shaft 95. Then, the control unit 88 compares the converted detected angle (hereinafter, may be simply referred to as "converted select detected angle") detected by the select rotation angle sensor 87 with the rotation angle of the electric motor 23 (step S26), and calculates a difference between the converted select detected angle and the angle detected by the resolver 100. In addition, the control unit 88 refers to the second threshold stored in the storage unit 200 (step S27).

When the difference between the converted select detected angle and the angle detected by the resolver 100 is not zero and the difference is larger than or equal to the second threshold stored in the storage unit 200 (YES in step S28 and YES in step S29), it is considered that a large slip has occurred in the select electromagnetic clutch 45. Therefore, the control unit 88 determines that an abnormality has occurred in the select electromagnetic clutch 45 (step S30), and transmits a signal indicating that the abnormality has occurred to the vehicle-side control unit 301 of the vehicle through the interface unit 201 (step S31).

When the difference between the converted select detected angle and the angle detected by the resolver 100 is not zero but the difference is smaller than the second threshold stored in the storage unit 200 (YES in step S28 and NO in step S29), the electric motor 23 is controlled to cause the shift select shaft 15 to perform an additional select operation. Specifically, the shift select shaft 15 is additionally moved in the axial direction M11 or M12 by the axial displacement lost due to the slip of the select electromagnetic clutch 45 (step S33).

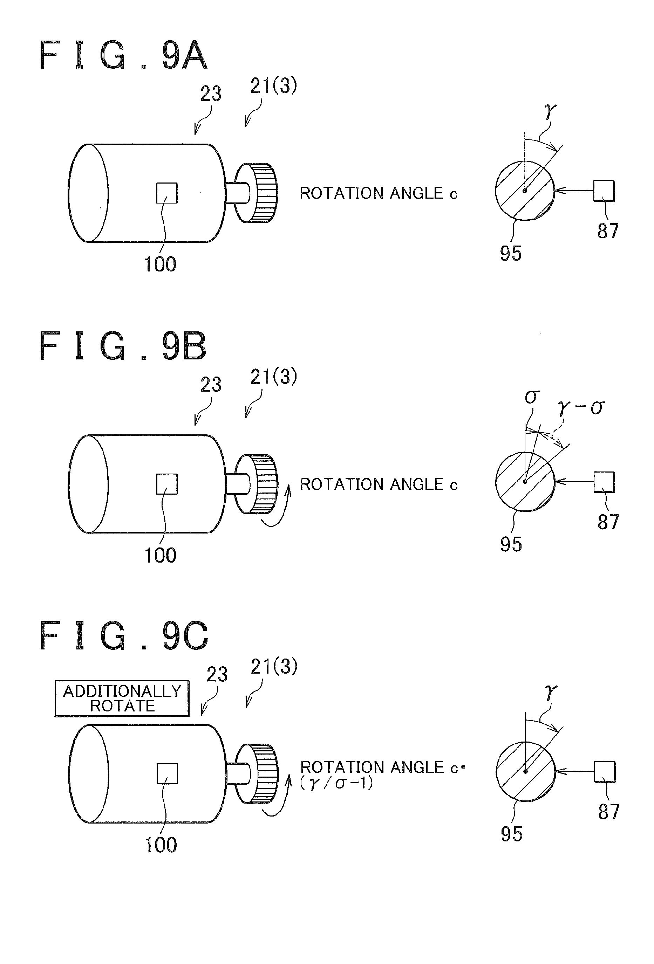

FIG. 9A to FIG. 9C are schematic views for illustrating the details of the additional select operation. The following additional select operation will be described with reference to FIG. 8 and FIG. 9A to FIG. 9C. The description will be provided on the assumption that, for example, it is necessary to rotate the electric motor 23 by a rotation angle "c" in order to rotate the pinion shaft 95 by a rotation angle "γ" (that is, the motor angle of "γ" is "c"), as shown in FIG. 9A.

However, in this case, there is a possibility that there is a slip in the select electromagnetic clutch 45, the pinion shaft 95 actually rotates only by a rotation angle "σ (< γ)" as shown in FIG. 9B, and there occurs a difference "y - σ" between the desired rotation angle of the pinion shaft 95 and the actual rotation angle of the pinion shaft 95. When the motor angle corresponding to the rotation angle "σ" of the pinion shaft 95 is smaller than the second threshold stored in the storage unit 200, an additional select operation is performed, and the pinion shaft 95 is additionally rotated by a rotation angle corresponding to "γ - σ" (rotation angle lost due to the slip of the select electromagnetic clutch 45). At this time, the rotation angle of the electric motor 23 is determined in consideration of the slip of the select electromagnetic clutch 45. That is, although the motor angle corresponding to "γ - σ" is originally c•(γ-σ)/γ, a slip has occurred in the electromagnetic clutch 45 and therefore the pinion shaft 95 rotates by only the angle σ with respect to the rotation angle c of the electric motor 23. In this case, as shown in FIG. 9C, the control unit 88 rotates the electric motor 23 by the rotation angle of c•(γ-σ)/σ (that is, c•(γ/σ-1)).

When a slip of the select electromagnetic clutch 45 has accidentally occurred and there is almost no likelihood of occurrence of such a slip thereafter, it may be considered that it is not necessary to compensate for the axial displacement of the shift select shaft 15, which is lost due to the slip. Therefore, in the present embodiment, if the difference between the converted select detected angle and the angle detected by the resolver 100 is not zero but the difference is smaller than the second threshold stored in the storage unit 200 (YES in step S28 and NO in step S29), only when the number of times that such an amount of slip has been detected is N (for example, three) or more (YES in step S32), the electric motor 23 is controlled such that the shift select shaft 15 is additionally moved axially by the axial displacement lost due to the slip of the select electromagnetic clutch 45 (step S33). Therefore, even when the difference between the converted shift detected angle and the angle detected by the resolver 100 is not zero but the difference is smaller than the second threshold stored in the storage unit 200 (YES in step S28 and NO in step S29), if the number of times that such an amount of slip has been detected is smaller than N (for example, one or two) (NO in step S32), the axial movement of the shift select shaft 15, which is lost due to the slip, is not compensated for.

Thus, the amount of a slip of the select electromagnetic clutch 45 is calculated on the basis of the rotation angle of the electric motor 23 and the rotation angle of the pinion shaft 95 about its axis. Then, the electric motor 23 is subjected to rotation control so as to additionally move the shift select shaft 15 axially by the displacement lost due to the slip of the select electromagnetic clutch 45. In this way, when there occurs a slip of the select electromagnetic clutch 45, the axial displacement of the shift select shaft 15, which is lost due to the slip, is compensated for. Therefore, irrespective of whether a slip has occurred in the select electromagnetic clutch 45, it is possible to always perform a gear shift operation through the axial movement of the shift select shaft 15.

The embodiment of the invention has been described above; however, the invention may be implemented in various other embodiments. For example, in the above description, the resolver 100 is used as an example of the motor rotation angle detecting means for detecting the rotation angle of the electric motor 23. Alternatively, a rotary encoder may be employed as the motor rotation angle detecting means.

In addition, in the above description, a shift operation once ends and then an additional shift operation is performed (a select operation once ends and then an additional select operation is performed). Alternatively, an additional shift operation may be performed in succession to a shift operation, and an additional select operation may be performed in succession to a select operation. In addition, in the above description, the transmission actuating device 3 performs both an additional shift operation and an additional select operation. Alternatively, the transmission actuating device 3 may perform only an additional shift operation or an additional select operation.

In addition, in the above description, the invention is applied to the transmission actuating device 3 that is able to perform both a shift operation and a select operation. Alternatively, the invention may be applied to a shift actuating device that performs only a shift operation. Other than the above, various design changes may be made within the scope of the matter recited in the claims.

## Claims

1. A transmission actuating device, comprising:
a shift operation unit that causes a transmission to perform a gear shift operation;
an electric motor that generates rotational driving force;
motor rotation angle detecting means for detecting a rotation angle of the electric motor;
a conversion mechanism that converts the rotational driving force from the electric motor into force that moves the shift operation unit;
an electromagnetic clutch that is able to allow or interrupt transmission of the rotational driving force from the electric motor to the conversion mechanism;
displacement detecting means for detecting a displacement of the shift operation unit; and
additional movement control means for executing control to additionally move the shift operation unit by a displacement lost due to a slip of the electromagnetic clutch, based on the detected rotation angle output from the motor rotation angle detecting means and the detected displacement output from the displacement detecting means.

2. The transmission actuating device according to claim 1, wherein the additional movement control means executes control of the electric motor when an amount of a slip of the electromagnetic clutch, which is calculated based on the detected rotation angle output from the motor rotation angle detecting means and the detected displacement output from the displacement detecting means, is smaller than a predetermined threshold.

3. The transmission actuating device according to claim 1 or 2, wherein the additional movement control means executes control of the electric motor when the number of times that the slip in an amount smaller than the threshold has occurred is larger than or equal to a predetermined number that is two ore more, based on the detected rotation angle output from the motor rotation angle detecting means and the detected displacement output from the displacement detecting means.

4. The transmission actuating device according to any one of claims 1 to 3, wherein:
the shift operation unit includes a drive shaft that is rotated about an axis of the drive shaft to perform a first gear shift operation;
the conversion mechanism includes a rotational driving force conversion mechanism that converts the rotational driving force from the electric motor into force that rotates the drive shaft about the axis;
the displacement detecting means includes shaft rotation angle detecting means for detecting a rotation angle of the drive shaft about the axis;
the electromagnetic clutch includes a first electromagnetic clutch that is able to allow or interrupt transmission of the rotational driving force from the electric motor to the rotational driving force conversion mechanism; and
the additional movement control means includes additional rotation control means for additionally rotating the drive shaft by a rotation angle lost due to a slip of the first electromagnetic clutch, based on the detected rotation angle output from the motor rotation angle detecting means and the detected rotation angle output from the shaft rotation angle detecting means.

5. The transmission actuating device according to any one of claims 1 to 3, wherein:
the shift operation unit includes a drive shaft that is moved in an axial direction of the drive shaft to perform a second gear shift operation;
the conversion mechanism includes an axial movement driving force conversion mechanism that converts the rotational driving force from the electric motor into force that moves the drive shaft in the axial direction;
the displacement detecting means includes axial displacement detecting means for detecting a displacement of the drive shaft in the axial direction;
the electromagnetic clutch includes a second electromagnetic clutch that is able to allow or interrupt transmission of the rotational driving force from the electric motor to the axial movement driving force conversion mechanism; and
the additional movement control means includes additional axial displacement control means for additionally moving the drive shaft axially by a displacement lost due to a slip of the second electromagnetic clutch, based on the detected rotation angle output from the motor rotation angle detecting means and the detected displacement output from the axial displacement detecting means.
